# EUROPÄISCHE PATENTSCHRIFT

(11) **EP 3 194 922 B1**
(45) Veröffentlichungstag und Bekanntmachung des Hinweises auf die Patenterteilung: **19.12.2018**
(21) Anmeldenummer: 15763894.1
(22) Anmeldetag: 14.09.2015
(51) Int. Cl.: G01M 3/26, G01M 3/32

(54) **FOLIENKAMMER MIT MESSVOLUMEN ZUR GROBLECKERKENNUNG**
FILM CHAMBER WITH MEASURING VOLUME FOR GROSS LEAK DETECTION
CHAMBRE À PAROIS SOUPLES COMPORTANT UN VOLUME DE MESURE POUR DÉTECTER DE MANIÈRE APPROXIMATIVE UNE FUITE

(30) Priorität: 15.09.2014 DE 102014218399
(43) Veröffentlichungstag der Anmeldung: 26.07.2017
(73) Patentinhaber: Inficon GmbH, 50968 Köln (DE)
(72) Erfinder: DECKER, Silvio, 50999 Köln (DE); NORBERT, Rolff, 50169 Horrem (DE)
(74) Vertreter: dompatent von Kreisler Selting Werner - Partnerschaft von Patent- und Rechtsanwälten mbB
(86) Internationale Anmeldenummer: PCT/EP2015/070936
(87) Internationale Veröffentlichungsnummer: WO 2016/041893

(56) Entgegenhaltungen:
- WO-A1-2015/140042
- DE-A1-102012 200 063
- DE-A1-102012 217 945

## Beschreibung

Die Erfindung betrifft eine Folienkammer zur Aufnahme eines Prüflings, der auf das Vorhandensein eines Lecks zu untersuchen ist.

Die Folienkammer ist eine Prüfkammer mit mindestens einem flexiblen Wandbereich, der zum Beispiel aus einer Folie besteht. Eine typische Folienkammer weist zwei Folienlagen auf, die um den Prüfling herum gegeneinander gelegt werden, um den Prüfling vollständig zu umschließen. Die Folienkammer wird nach Aufnahme des Prüflings hermetisch verschlossen und evakuiert. Anschließend wird die Druckänderung in dem Folienkammervolumen im Bereich außerhalb des Prüflings überwacht, wobei ein Druckanstieg als Hinweis auf ein Leck in dem Prüfling angesehen wird. Alternativ zur Überwachung des Drucks im Folienkammervolumen kann auch der flexible Wandbereich überwacht werden, wobei eine Veränderung des flexiblen Wandbereichs beziehungsweise der Folie auf ein Leck hindeuten kann. Ein derartiges Verfahren ist bekannt aus DE 10 2012 200 063 A1.

Eine Schwierigkeit besteht bei einem Prüfling mit einem Grobleck darin, dass beim Evakuieren der Folienkammer zugleich auch der Prüfling durch das Grobleck hindurch mit evakuiert wird. Die Druckanstiegsmessung zur Erkennung eines Lecks nach Evakuieren der Folienkammer versagt in einem solchen Fall. Als Grobleck wird ein Leck angesehen, das einen Volumenstrom durch das Leck ermöglicht, welcher innerhalb der Abpumpzeit einen wesentlichen Anteil des freien Volumens innerhalb des Prüflings absaugt.

DE 10 2012 217 945 A1 beschreibt eine Folienkammer zur Leckagedetektion an einem nicht formstarren Prüfling und mit einer Druckkammer, die dazu ausgebildet ist, auf einen flexiblen Wandbereich der Folienkammer einen äußeren Überdruck auszuüben.

Der Erfindung liegt die Aufgabe zugrunde, eine Folienkammer und ein entsprechendes Verfahren zu schaffen, um ein Grobleck an einem Prüfling erkennen zu können.

Die erfindungsgemäße Folienkammer ist definiert durch die Merkmale von Anspruch 1. Das erfindungsgemäße Verfahren ist definiert durch die Merkmale von Patentanspruch 8.

An den das Folienkammervolumen begrenzenden flexiblen Wandbereich grenzt eine Messkammer an, die hermetisch von dem Folienkammervolumen getrennt ist. Wenn ein Prüfling, der ein Grobleck aufweist, untersucht wird, wird beim Evakuieren der Folienkammer auch der Prüfling zumindest zu einem Teil mit evakuiert. Aufgrund des flexiblen Wandbereichs zwischen dem Folienkammervolumen und dem Messvolumen vergrößert sich dann das Messvolumen. Die Vergrößerung des Messvolumens ist dabei größer als im Falle eines dichten Prüflings oder im Falle eines Prüflings, der ein kleineres Leck aufweist. Im Falle eines dichten Prüflings wird lediglich das Folienkammervolumen im Bereich außerhalb des Prüflings evakuiert. Im Falle eines Prüflings mit einem Grobleck wird zudem auch der oder zumindest ein Teil des Prüflingsvolumens evakuiert. Im Falle eines Groblecks wird also ein größeres Volumen evakuiert als im Falle eines dichten Prüflings. Dadurch ist die Volumenausdehnung des Messvolumens umso größer, je größer das Leck in einem Prüfling ist. Anhand der Ausdehnung des Messvolumens und/oder des flexiblen Wandbereichs kann dann eine Aussage über die Größe eines möglichen Lecks in dem Prüfling getroffen werden.

Vorzugsweise weist die Folienkammer zwei Folienlagen auf, die jeweils den flexiblen Wandbereich bilden. Die beiden Folienlagen umschließen das Folienkammervolumen im geschlossenen Zustand der Folienkammer. Jede Folienlage wird dabei von einem Rahmenelement gehalten und aufgespannt. Die beiden Rahmen können beispielsweise gelenkig miteinander verbunden sein, so dass die Folienkammer auf- und zugeklappt werden kann. Im geöffneten Zustand der Folienkammer ist ein Zugriff auf das Folienkammervolumen möglich, um den Prüfling in die Folienkammer zu legen. Im geschlossenen Zustand der Folienkammer ist das Folienkammervolumen hermetisch von der die Folienkammer außen umgebenden Atmosphäre getrennt.

Das Messvolumen kann von einer Messkammer gebildet werden, die einen Messkammerring und einen Messkammerdeckel aufweist. Der Messkammerring weist zwei einander gegenüberliegende offene Enden auf. Das eine offene Ende wird von der Folienlage beziehungsweise dem flexiblen Wandbereich verschlossen. Das gegenüberliegende Ende des Messkammerrings wird von dem Messkammerdeckel verschlossen.

Vorzugsweise ist jede der beiden Folienlagen mit einer separaten Messkammer versehen. Die beiden Messkammern können gasdicht zum Beispiel durch eine gasführende Leitung miteinander verbunden sein und sind gegenüber der die Folienkammer und die Messkammern außen umgebenden Atmosphäre hermetisch verschlossen.

In mindestens einer der. beiden Messkammern kann ein Belüftungsventil ausgebildet sein. Das Belüftungsventil kann dazu dienen, den Druck innerhalb der Messkammer(n) in geeigneter Weise einzustellen. Besonders vorteilhaft ist es, wenn der Druck innerhalb der Messkammer(n) dann atmosphärischem Druck von ungefähr 1 bar entspricht, wenn die Folienkammer im geschlossenen und evakuierten Zustand einen dichten Prüfling enthält. Vorteilhafterweise wird die Messkammer also dann belüftet, wenn ein dichter Prüfling oder ein Prüfling mit einem besonders kleinen Leck in der Folienkammer enthalten ist und die Folienkammer evakuiert worden ist.

Das Messvolumen zumindest einer Messkammer ist erfindungsgemäß mit einem Sensor zum Überwachen des Messvolumens verbunden sein. Bei dem Sensor kann es sich um einen Drucksensor oder um einen Flusssensor handeln. Als Drucksensor kommen ein Differenzdrucksensor und ein Totaldrucksensor in Frage.
Im Folgenden wird anhand der Figuren ein Ausführungsbeispiel der Erfindung näher erläutert. Es zeigen:
- Figur 1: die Folienkammer im geöffneten Zustand,
- Figur 2: eine geschlossene Folienkammer mit dichten Prüfling,
- Figur 3: eine geschlossene Folienkammer mit grob undichtem Prüfling,
- Figur 4: den Differenz-Druckverlauf in dem Messvolumen und
- Figur 5: den Totaldruckverlauf in dem Messvolumen.

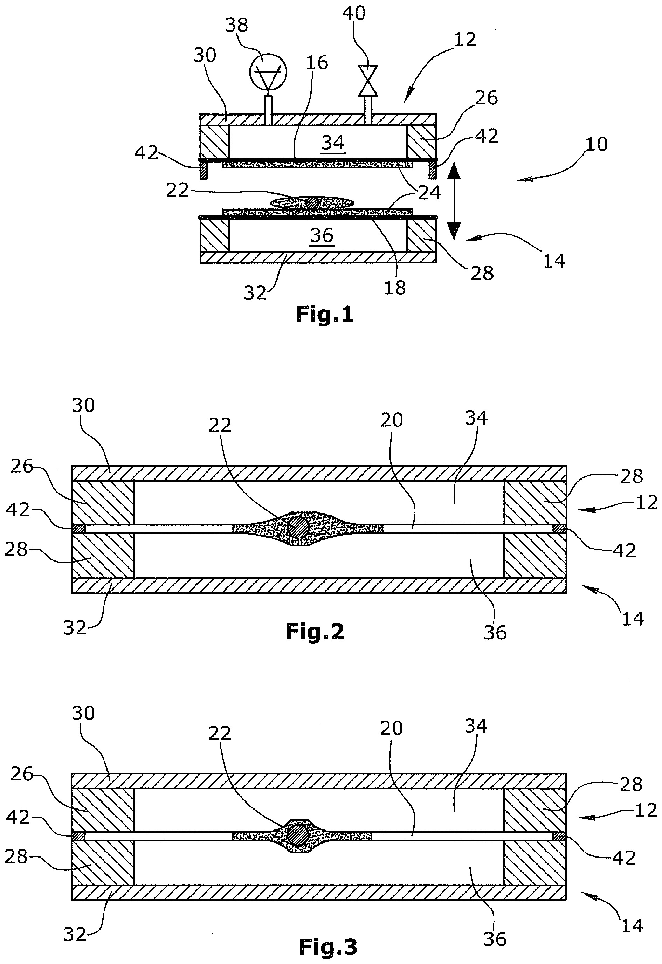

Die in Figur 1 dargestellte Folienkammer 10 besteht aus einem oberen Deckel 12 und einem unteren Deckel 14. Ein wesentliches Element des oberen Deckels ist die obere Folienlage 16 und ein wesentliches Element des unteren Deckels ist die untere Folienlage 18. Die beiden Folienlagen 16, 18 umschließen im geschlossenen Zustand der Folienkammer (siehe Figuren 2 und 3) den in dem Folienkammervolumen 20 enthaltenen Prüfling 22. Jede der beiden Folienlagen 16, 18 weist an ihrer dem Folienkammervolumen 20 zugewandten Seite ein Vlies 24 auf. Jede Folienlage 16, 18 bildet zusammen mit dem Vlies 24 den jeweiligen flexiblen Wandbereich der Folienkammer 10. Die Folien 16, 18 sind im Bereich ihres äußeren Randes jeweils mit einem Messkammerring 26, 28 gasdicht verbunden. Die Folienlage 16 verschließt somit hermetisch das untere, der Folienkammer 10 zugewandte Ende des oberen Messkammerrings 26. Die untere Folienlage 18 verschließt in entsprechender Weise das obere, dem Folienkammervolumen 20 zugewandte Ende des unteren Messkammerrings 28. Das jeweils der entsprechenden Folienlage 16, 18 gegenüberliegende Ende jedes Messkammerrings 26, 28 ist mit einem Messkammerdeckel 30, 32 hermetisch verschlossen.

Der Messkammerdeckel 30, der Messkammerring 26 und die Folienlage 16 umschließen somit ein oberes Messvolumen 34 und die Folienlage 18, der Messkammerring 28 und der Messkammerdeckel 32 umschließen ein unteres Messvolumen 36. Die Messvolumina 34, 36 sind hermetisch von dem Folienkammervolumen 20 und der die Folienkammer 10 umgebenden äußeren Atmosphäre getrennt. Durch eine in den Figuren nicht dargestellte gasleitende Verbindung, zum Beispiel einen Schlauch, sind die Messvolumina 34, 36 gasleitend miteinander verbunden.

Das obere Messvolumen 34 ist gasleitend mit einem Drucksensor 38 verbunden. Über ein in dem oberen Messkammerdeckel 30 ausgebildetes Belüftungsventil 40 ist das obere Messvolumen 34 mit der die Folienkammer 10 außen umgebenden Atmosphäre verbunden. Im verschlossenen Zustand des Belüftungsventils 40 ist das Messvolumen 34 von der Atmosphäre hermetisch getrennt und im geöffneten Zustand des Ventils gasleitend mit der Atmosphäre verbunden.

Zwischen den beiden Folienlagen 16, 18 ist im Bereich des äußeren Randes ein Dichtungsring 42 vorgesehen, der eine gasdichte Verbindung zwischen den Folienlagen 16, 18 im geschlossenen Zustand der Folienkammer 10 schafft.

Figur 1 zeigt die Folienkammer 10 im geöffneten Zustand. Der Zugriff auf das Folienkammervolumen 20 ist frei, um den Prüfling 22 in das Folienkammervolumen 20 zu legen. Anschließend wird die Folienkammer 10 verschlossen und das Folienkammervolumen 20 evakuiert. Im Falle eines dichten Prüflings stellt sich der in Figur 2 dargestellte Zustand ein. In diesem Zustand werden über das Belüftungsventil 40 die beiden Messvolumen 34, 36 belüftet, so dass atmosphärischer Druck von ungefähr 1 bar herrscht.

Im Falle eines grob undichten Prüflings, der ein Grobleck mit einem Durchmesser von circa 1 cm aufweist, stellt sich der in Figur 3 dargestellte Zustand ein. Der Prüfling 22 wird dabei durch das Grobleck hindurch beim Evakuieren des Folienkammervolumens 20 zu einem großen Teil mit evakuiert. Der Innendruck innerhalb des Prüflings 22 ist dann geringer als der Druck in den Messvolumina 34, 36. Über die Folienlagen 16, 18 wirkt der Druck in den Messvolumina 34, 36 auf den Prüfling 22, so dass dieser wie in Figur 3 dargestellt komprimiert und ebenfalls evakuiert wird. Der resultierende Endruck in den Messvolumina 34, 36 ist dann geringer als in dem in Figur 2 dargestellten Zustand eines dichten Prüflings.

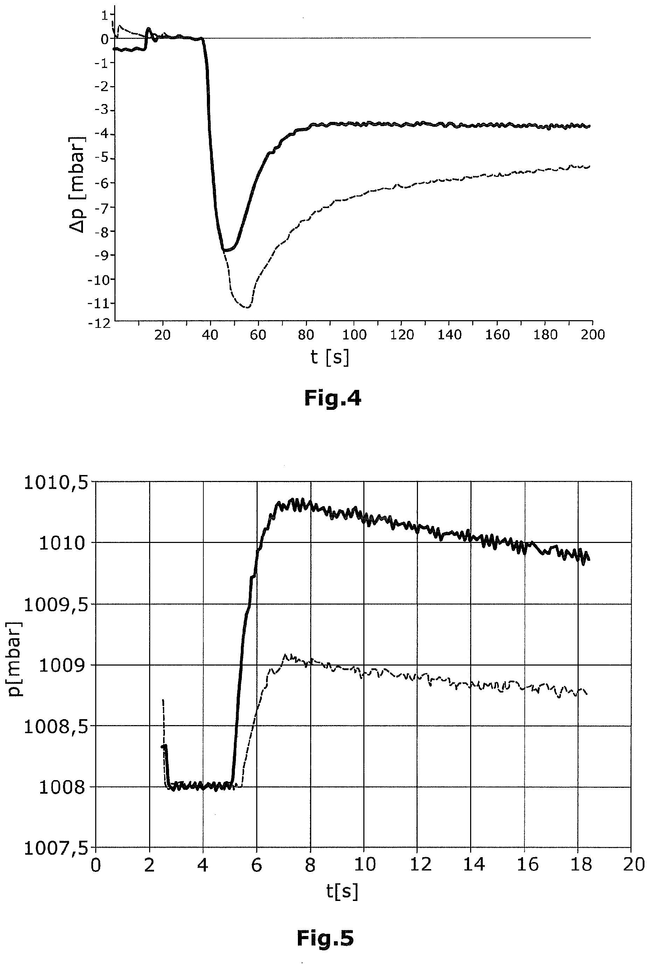

Mit Hilfe des Drucksensors 38 kann der Druck in den Messvolumina 34, 36 beim Evakuieren der Folienkammer 10 überwacht werden, um anhand des Druckverlaufs zu ermitteln, ob der Prüfling ein Grobleck aufweist. In Figur 4 sind die gemessenen Differenz-Druckverläufe in den Messvolumina 34, 36 dargestellt. Die kontinuierlich durchgehende Linie repräsentiert den Druckverlauf eines dichten Prüflings gemäß Figur 2. Die gestrichelte Linie repräsentiert den Druckverlauf in den Messvolumina 34, 36 im Falle eines grob undichten Prüflings 22 gemäß Figur 3. Im Falle des dichten Prüflings fällt der Druck nach circa 45 Sekunden bis auf -9 mbar ab und im Falle eines grob undichten Prüflings fällt der Druck nach etwa 55 Sekunden bis auf -11,5 mbar ab. In anderen Fällen oder Ausführungsbeispielen sind selbstverständlich andere Zahlenwerte denkbar.

Figur 5 zeigt den Totaldruckverlauf in den Messvolumina 34, 36. Der Druckverlauf für einen dichten Prüfling ist durchgehend dargestellt und der Druckverlauf für einen grob undichten Prüfling gestrichelt. Der dichte Prüfling wird nicht evakuiert und verdrängt mehr Volumen in der Folienkammer als der grob undichte Prüfling, der bei der Messung zum Teil mit evakuiert wird und daher schrumpft. Je größer das Volumen des Prüflings ist, desto größer ist die Verdrängung des Volumens. Daher steigt der Druck im Messvolumen bei dichtem Prüfling mehr an als bei grob undichtem Prüfling. In dem in Figur 5 dargestellten Beispiel steigt der Druck bei dichtem Prüfling um 2,5 mbar nach einer Messzeit von circa 7 Sekunden, während der Totaldruck beim grob undichten Prüfling nur um etwa 1 mbar ansteigt.

## Patentansprüche

1. Folienkammer (10) zur Aufnahme eines Prüflings (22), der auf das Vorhandensein eines Lecks zu prüfen ist, wobei die Folienkammer (10) ein Folienkammervolumen (20) umschließende Wände aufweist, die mindestens einen flexiblen Wandbereich aufweisen, wobei ein an den flexiblen Wandbereich angrenzendes Messvolumen (34, 36) auf der dem Folienkammervolumen (20) gegenüberliegenden Seite des flexiblen Wandbereichs angeordnet und hermetisch von dem Folienkammervolumen (20) getrennt ausgebildet ist, wobei das Messvolumen (34, 36) mit einem Sensor gasleitend verbunden ist, **dadurch gekennzeichnet, dass** der Sensor dazu ausgebildet ist, das Messvolumen zu überwachen, um anhand des Ergebnisses der Überwachung eine Aussage über die Größe eines möglichen Lecks zu treffen.

2. Folienkammer (10) nach Anspruch 1, **dadurch gekennzeichnet, dass** der Sensor (38) ein Drucksensor oder ein Flusssensor ist.

3. Folienkammer (10) nach Anspruch 1 oder 2, **dadurch gekennzeichnet, dass** das Messvolumen (34, 36) über ein Belüftungsventil (40) mit der das Messvolumen (34, 36) umgebenden Atmosphäre verbunden ist.

4. Folienkammer (10) nach einem der vorhergehenden Ansprüche, **dadurch gekennzeichnet, dass** die Folienkammer (10) eine erste und eine zweite Folienlage (16, 18) aufweist, die in einem geschlossenen Zustand der Folienkammer (10) das Folienkammervolumen (20) umschließen, wobei ein erstes Messvolumen (34, 36) an die erste Folienlage (16, 18) und ein zweites Messvolumen (34, 36) an die zweite Folienlage (16, 18) angrenzt.

5. Folienkammer (10) nach dem vorhergehenden Anspruch, **dadurch gekennzeichnet, dass** die beiden Messvolumen (34, 36) gasleitend miteinander verbunden sind.

6. Folienkammer (10) nach einem der vorhergehenden Ansprüche, **dadurch gekennzeichnet, dass** das Messvolumen (34, 36) von einem den flexiblen Wandbereich an dessen Unterseite tragenden Messkammerring (26, 28) und einem den Messkammerring (26, 28) auf der dem flexiblen Wandbereich gegenüberliegenden Seite verschließenden Messkammerdeckel (30, 32) gebildet wird.

7. Folienkammer (10) nach einem der vorhergehenden Ansprüche, **dadurch gekennzeichnet, dass** die Folienkammer (10) einen geöffneten Zustand zum Einlegen eines Prüflings (22) in das Folienkammervolumen (20) und einen geschlossenen Zustand, in dem das Folienkammervolumen (20) hermetisch abgeschlossen ist, aufweist, wobei das Messvolumen (34, 36) unabhängig von dem Schließzustand der Folienkammer (10) hermetisch abgeschlossen ist.

8. Verfahren zum Prüfen eines Prüflings (22) auf das Vorhandensein eines Lecks und der Verwendung einer Folienkammer (10) nach einem der vorhergehenden Ansprüche, mit den folgenden Schritten:
Einlegen des Prüflings (22) in die Folienkammer (10),
Schließen der Folienkammer (10),
Evakuieren der Folienkammer (10), **gekennzeichnet durch** Überwachen des Messvolumens (34, 36) während des Evakuierens der Folienkammer (10), um anhand des Ergebnisses der Überwachung eine Aussage über die Größe eines möglichen Lecks in dem Prüfling (22) zu treffen.

9. Verfahren nach dem vorhergehenden Anspruch, **gekennzeichnet durch** das Erkennen eines Groblecks, wenn das Messvolumen (34, 36) beim Evakuieren der Folienkammer (10) zunimmt.

10. Verfahren nach einem der vorhergehenden Ansprüche, **dadurch gekennzeichnet, dass** nach dem Schließen und Evakuieren der Folienkammer (10) das Messvolumen (34, 36) belüftet wird, wenn kein Grobleck in dem Prüfling (22) detektiert worden ist.

11. Verfahren nach einem der vorhergehenden Ansprüche, **dadurch gekennzeichnet, dass** die von dem eingelegten Prüfling (22) beeinflusste Änderung des Messvolumens (34, 36) durch Messen des Drucks innerhalb der Folienkammer (10) und/oder durch Messen des Gasflusses innerhalb der Folienkammer (10) oder aus der Folienkammer (10) heraus bestimmt wird.

12. Verfahren nach einem der vorhergehenden Ansprüche, **dadurch gekennzeichnet, dass** das absolute Volumen des Prüflings (22) durch Messen der Änderung des Drucks innerhalb der Folienkammer (10) oder durch Messen des Gasflusses in der Folienkammer (10) oder aus der Folienkammer (10) heraus bestimmt wird.

## Claims

1. Film chamber (10) for receiving a test object (22) which is to be tested for the presence of a leak, wherein the film chamber (10) has walls enclosing a film chamber volume (20), said walls having at least one flexible wall portion, wherein a measuring volume (34, 36) adjoining the flexible wall portion is arranged on the side of the flexible wall portion which is situated opposite the film chamber volume (20) and is hermetically separated from the film chamber volume (20), wherein the measuring volume (34, 36) is connected in a gas-conveying manner with a sensor,
**characterized in that**
the sensor is configured to monitor the measuring volume so as to assess the size of a possible leak based on the monitoring result.

2. Film chamber (10) of claim 1, **characterized in that** the sensor (38) is a pressure sensor or a flow sensor.

3. Film chamber (10) of claim 1 or 2, **characterized in that** the measuring volume (34, 36) is connected with the atmosphere surrounding the measuring volume (34, 36) via a ventilation valve (40).

4. Film chamber (10) of one of the preceding claims, **characterized in that** the film chamber (10) has a first and a second film layer (16, 18) which, in a closed state of the film chamber (10), enclose the film chamber volume (20), wherein a first measuring volume (34, 36) adjoins the first film layer (16, 18) and a second measuring volume (34, 36) adjoins the second film layer (16, 18).

5. Film chamber (10) of the preceding claim, **characterized in that** the two measuring volumes (34, 36) are connected in a gas-conveying manner.

6. Film chamber (10) of one of the preceding claims, **characterized in that** the measuring volume (34, 36) is formed by a measuring chamber ring (26, 28) supporting the flexible wall portion at the lower side thereof and a measuring chamber cover (30, 32) closing the measuring chamber ring (26, 28) on the side opposite the flexible wall portion.

7. Film chamber (10) of one of the preceding claims, **characterized in that** the film chamber (10) has an open state for placing a test object (22) in the film chamber volume (20) and a closed state in which the film chamber volume (20) is hermetically closed, wherein the measuring volume (34, 36) is hermetically closed independent of the state of closure of the film chamber (10).

8. Method for testing a test object (22) for the presence of a leak and for using a film chamber (10) of one of the preceding claims, comprising the following steps:
placing the test object (22) in the film chamber (10),
closing the film chamber (10),
evacuating the film chamber (10),
**characterized by**
monitoring the measuring volume (34, 36) during evacuation of the film chamber (10) so as to assess the size of a possible leak in the test object (22) based on the monitoring result.

9. Method of the preceding claim, **characterized by** the detection of a gross leak if the measuring volume (34, 36) increases as the film chamber (10) is evacuated.

10. Method of one of the preceding claims, **characterized in that** after the closing and evacuation of the film camber (10), the measuring volume (34, 36) is ventilated if no gross leak can be detected in the test object (22).

11. Method of one of the preceding claims, **characterized in that** the change in the measuring volume (34, 36) influenced by the test object (22) placed therein is determined by measuring the pressure within the film chamber (10) or by measuring the gas flow in the film chamber (10) or from the film chamber (10).

12. Method of one of the preceding claims, **characterized in that** the absolute volume of the test object (22) is determined by measuring the change in pressure in the film chamber (10) or by measuring the gas flow in the film chamber (10) or from the film chamber (10).

## Revendications

1. Chambre en feuille (10) destinée à accueillir un échantillon (22) sur lequel on veut vérifier la présence d'une fuite, dans laquelle la chambre en feuille (10) comporte des parois délimitant un volume de chambre en feuille (20) et comprenant au moins une zone de paroi flexible, dans laquelle un volume de mesure (34, 36) adjacent à la zone de paroi flexible est agencé sur le côté de la paroi flexible opposé au volume de chambre en feuille (20) et conçu pour être séparé hermétiquement du volume de chambre en feuille (20),
dans laquelle le volume de mesure (34, 36) est connecté à un capteur perméable aux gaz, **caractérisée en ce que**
le capteur est conçu de façon à surveiller le volume de mesure, afin de donner un diagnostic sur la taille d'une fuite possible au moyen du résultat de la surveillance.

2. Chambre en feuille (10) selon la revendication 1, **caractérisée en ce que** le capteur (38) est un capteur de pression ou un capteur de débit.

3. Chambre en feuille (10) selon la revendication 1 ou 2, **caractérisée en ce que** le volume de mesure (34, 36) est relié à l'atmosphère entourant le volume de mesure (34, 36) par le biais d'une valve d'aération (40).

4. Chambre en feuille (10) selon l'une des revendications précédentes, **caractérisée en ce que** la chambre en feuille (10) comporte une première et une deuxième couche de feuille (16, 18), lesquelles délimitent le volume de chambre en feuille (20) dans un état fermé de la chambre en feuille (10), dans laquelle un premier volume de mesure (34, 36) jouxte la première couche de feuille (16, 18) et un deuxième volume de mesure (34, 36) jouxte la deuxième couche de feuille (16, 18).

5. Chambre en feuille (10) selon l'une des revendications précédentes, **caractérisée en ce que** les deux volumes de mesure (34,36) sont reliés l'un à l'autre d'une manière perméable aux gaz.

6. Chambre en feuille (10) selon l'une des revendications précédentes, **caractérisée en ce que** le volume de mesure (34, 36) est formé d'un anneau de chambre de mesure (26, 28) soutenant la zone de paroi flexible sur son côté inférieur et un couvercle de chambre de mesure (30, 32) fermant l'anneau de chambre de mesure (26, 28) sur le côté opposé à la zone de paroi flexible.

7. Chambre en feuille (10) selon l'une des revendications précédentes, **caractérisée en ce que** la chambre en feuille (10) comporte un état ouvert pour l'insertion d'un échantillon (22) dans le volume de chambre en feuille (20) et un état fermé, où le volume de chambre en feuille (20) est fermé hermétiquement, dans laquelle le volume de mesure (34, 36) est fermé hermétiquement indépendamment de l'état de fermeture de la chambre en feuille (10).

8. Procédé de vérification de la présence d'une fuite sur un échantillon (22) et d'utilisation d'une chambre en feuille (10) selon l'une des revendications précédentes, avec les étapes suivantes :
insertion de l'échantillon (22) dans la chambre en feuille (10),
fermeture de la chambre en feuille (10),
mise sous vide de la chambre en feuille (10), **caractérisée par**
surveillance du volume de mesure (34, 36) pendant l'évacuation de la chambre en feuille (10), afin de donner un diagnostic sur la taille d'une fuite possible dans l'échantillon (22) au moyen du résultat de la surveillance.

9. Procédé selon l'une des revendications précédentes, **caractérisé par** la reconnaissance d'une fuite grave, lorsque le volume de mesure (34, 36) augmente lors de mise sous vide de la chambre en feuille (10).

10. Procédé selon l'une des revendications précédentes, **caractérisé en ce qu'**après la fermeture et la mise sous vide de la chambre en feuille (10), le volume de mesure (34, 36) est ventilé lorsqu'aucune fuite majeure n'est détectée dans l'échantillon (22).

11. Procédé selon l'une des revendications précédentes, **caractérisé en ce que** la variation du volume de mesure (34, 36) causée par l'échantillon (22) introduit est déterminée par mesure de la pression à l'intérieur de la chambre en feuille (10) et/ou par mesure du débit de gaz à l'intérieur de la chambre en feuille (10) ou sortant de la chambre en feuille (10).

12. Procédé selon l'une des revendications précédentes, **caractérisé en ce que** le volume absolu de l'échantillon (22) est déterminé par mesure de la variation de pression à l'intérieur de la chambre en feuille (10) et/ou par mesure du débit de gaz à l'intérieur de la chambre en feuille (10) ou sortant de la chambre en feuille (10).
